# EUROPÄISCHE PATENTANMELDUNG

(11) **EP 4 636 471 A1**
(43) Veröffentlichungstag der Anmeldung: **22.10.2025**
(21) Anmeldenummer: 25170891.3
(22) Anmeldetag: 16.04.2025
(51) Int. Cl.: G02F 1/15, G02F 1/1523

(54) **VERFAHREN ZUR HERSTELLUNG EINES ELEKTROCHROMEN LAMINATS UND ELEKTROCHROMES LAMINAT**

(30) Priorität: 17.04.2024 DE 102024203546
(71) Anmelder: Fraunhofer-Gesellschaft zur Förderung der angewandten Forschung e.V., 80686 München (DE)
(72) Erfinder: Fahland, Matthias, 01277 Dresden (DE); Steiner, Cindy, 01277 Dresden (DE); Vogt, Tobias, 01277 Dresden (DE); Meyer, Uwe, 01277 Dresden (DE)
(74) Vertreter: Pfenning, Meinig & Partner mbB

(57) **Zusammenfassung**

Es werden ein Verfahren zur Herstellung eines elektrochromen Laminats und ein elektrochromes Laminat bereitgestellt. In dem Verfahren wird eine Folie bereitgestellt, die einen transparenten, haftklebrigen Polymerelektrolyt enthält oder daraus besteht, eine erste Halbzelle bereitgestellt, die aus einem ersten Laminat aus einer ersten transparenten Elektrodenschicht und einer elektrochromen Schicht besteht, und eine zweiten Halbzelle bereitgestellt, die aus einem zweiten Laminat aus einer zweiten transparenten Elektrodenschicht und einer Ionenspeicherschicht und besteht. Hierbei weist die erste Halbzelle keinen Gassubstratkörper und keinen Polymersubstratkörper auf, der die erste transparente Elektrodenschicht kontaktiert und die zweite Halbzelle weist keinen Gassubstratkörper und keinen Polymersubstratkörper auf, der die zweite transparente Elektrodenschicht kontaktiert. Aus den beiden Halbzellen wird ein elektrochromes Laminat hergestellt.

## Beschreibung

Es werden ein Verfahren zur Herstellung eines elektrochromen Laminats und ein elektrochromes Laminat bereitgestellt. In dem Verfahren wird eine Folie bereitgestellt, die einen transparenten, haftklebrigen Polymerelektrolyt enthält oder daraus besteht, eine erste Halbzelle bereitgestellt, die aus einem ersten Laminat aus einer ersten transparenten Elektrodenschicht und einer elektrochromen Schicht besteht, und eine zweiten Halbzelle bereitgestellt, die aus einem zweiten Laminat aus einer zweiten transparenten Elektrodenschicht und einer Ionenspeicherschicht und besteht. Hierbei weist die erste Halbzelle keinen Glassubstratkörper und keinen Polymersubstratkörper auf, der die erste transparente Elektrodenschicht kontaktiert und die zweite Halbzelle weist keinen Glassubstratkörper und keinen Polymersubstratkörper auf, der die zweite transparente Elektrodenschicht kontaktiert. Aus den beiden Halbzellen wird ein elektrochromes Laminat hergestellt.

Innerhalb der Europäischen Union trägt der der Gebäudesektor gegenwärtig zu etwa 40% zum Primärenergieverbrauch bei. Bürokomplexe, öffentliche Gebäude und Neubauten sind zumeist architektonisch geprägt durch große, nach Süden ausgerichtete Fenster und Glasfassaden. Der Energieaustausch zwischen dem Gebäudeinneren und der Umwelt wird durch die Fenster stark beeinflusst und ist von entscheidender Bedeutung für die Energiebilanz.

Seit der ersten Ölkrise in den 1970-iger Jahren wurden die Bemühungen intensiviert, diesen Energiefluss im Sinne einer verbesserten Effizienz zu gestalten und zu steuern. Meilensteine auf diesem Weg waren die Einführung von Isolierglas-Fenstern sowie Low-e-Beschichtungen und Solar-Control-Beschichtungen auf Fensterscheiben. Die Low-e-Beschichtungen und Solar-Control-Beschichtungen bestehen jeweils aus mehreren Lagen von dünnen Schichten, die kombiniert dazu führen, dass die Fensterscheiben für sichtbares Licht transparent bleiben, im infraroten (IR) Spektralbereich dagegen wie ein Spiegel wirken. Durch besagte Beschichtungen wird sowohl der Durchtritt von Wärmestrahlung (mittlerer Infrarotbereich - MIR) aus einem Gebäudeinneren durch die Fensterscheiben beeinflusst, was (v.a. im Winter) ein Abkühlen des Gebäudeinneren reduziert, als auch der Durchtritt eines Teils des Sonnenlichts (naher Infrarotbereich - NIR) aus dem Gebäudeäußeren durch die Fensterscheiben beeinflusst, was bei starker Sonneneinstrahlung (v.a. im Sommer) eine ungewünschten Aufheizung des Gebäudeinneren verringert. Mit derartigen Lösungen kann eine Optimierung von Fensterscheiben für einen bestimmten Ort mit typischer Wetterlage und/oder auf eine bestimmte Jahreszeit erzielt werden.

Für eine weitere Verbesserung der Energiebilanz ist es wünschenswert, über Fensterscheiben mit veränderlichen optischen Eigenschaften zu verfügen. Dazu sind verschiedene Konzepte bekannt, die teilweise auch schon in kommerzielle Produkte umgesetzt wurden. Das wichtigste Konzept ist das elektrochrome System bzw. elektrochrome Laminat. Ein elektrochromes System ist ein Laminat, das aus mehreren Schichten besteht. Kern sind hierbei die elektrochrome Schicht und die Ionenspeicherschicht, die durch eine Elektrolytschicht voneinander getrennt sind. Diese elektrochrome Schicht und die Ionenspeicherschicht werden jeweils durch eine transparente Elektrodenschicht abgeschlossen.

In dem elektrochromen System bzw. Laminat befinden sich positiv geladene Ionen, meist Wasserstoff oder Lithium, die aufgrund einer zwischen den beiden transparenten Elektrodenschichten angelegten Spannung zwischen der elektrochromen Schicht und der Ionenspeicherschicht hin- und herwandern können. Diese positiv geladenen Ionen führen in der elektrochromen Schicht, in einigen Ausführungen auch in der Ionenspeicherschicht, zu Änderungen der optischen Eigenschaften, die sich in der Konsequenz auf die Transmission und Reflexion des gesamten elektrochromen Laminats auswirken. Die optischen Eigenschaften des elektrochromen Laminats lassen sich somit durch ein elektrisches Signal verändern.

Fensterscheiben mit elektrochromen Beschichtungen sind bereits heute verbreitet. Zur Herstellung der elektrochromen Laminate werden üblicherweise die jeweiligen Schichten des elektrochromen Laminats zunächst auf einen Glaskörper abgeschieden und dann zusammengefügt. Anschließend wird das elektrochrome Laminat in Verbundglas integriert (d.h. verkapselt) und auf diese Weise von Umwelteinflüssen abgeschirmt. Der Nachteil dieser Vorgehensweise ist, dass ein elektrochromes Laminat entsteht, dessen Herstellung aufwändig und kostenintensiv ist. Zudem weist das hergestellte elektrochrome Laminat ein hohes Volumen und Gewicht auf, was dessen Transport zusätzlich aufwändig und kostenintensiv macht. Die besagten Nachteile stehen einer weitläufigen Verbreitung im Wege. Oft ist dadurch der potenzielle Einsatzort auf die geografische Nähe des Herstellungsorts beschränkt.

Eine Möglichkeit, die genannten Nachteile abzuschwächen, ist die Abscheidung auf einen Kunststoffkörper anstelle der Abscheidung auf einen Glaskörper, da Kunststoff ein geringeres spezifisches Gewicht aufweist als Glas. In diesem Fall werden zwei sogenannte Halbzellen auf jeweils einer Kunststoffschicht abgeschieden, wobei eine erste Halbzelle aus einer ersten transparenten Elektrodenschicht und einer elektrochromen Schicht besteht und eine zweite Halbzelle aus einer zweiten transparenten Elektrodenschicht und einer Ionenspeicherschicht besteht. Anschließend werden beide Halbzellen mit einem Laminierklebstoff, der als Elektrolytschicht wirkt, zu einem elektrochromen Laminat zusammengefügt. Ein solches Verfahren wird beispielsweise in der DE 10 2020 206 126 A1 beschrieben.

Es besteht jedoch ein Bedarf, elektrochrome Laminate noch einfacher, kostengünstiger und umweltfreundlicher herstellen und transportieren zu können und zudem in höchstmöglicher optischer Qualität herstellen zu können.

Ausgehend hiervon war es daher die Aufgabe der vorliegenden Erfindung, ein Verfahren zur Herstellung eines elektrochromen Laminats bereitzustellen, das zumindest einen Vorteil gegenüber dem Stand der Technik aufweist. Insbesondere sollte es mit dem Verfahren möglich sein, ein elektrochromes Laminat einfacher, kostengünstiger und umweltfreundlicher herstellen und/oder transportieren zu können und insbesondere in höchstmöglicher optischer Qualität herstellen zu können. Zudem sollte ein elektrochromes Laminat bereitgestellt werden, das zumindest einen der besagten Vorteile aufweist.

Die Aufgabe wird gelöst durch das Verfahren mit den Merkmalen von Anspruch 1 und das elektrochrome Laminat mit den Merkmalen von Anspruch 7. Die abhängigen Ansprüche zeigen vorteilhafte Weiterbildungen auf.

Erfindungsgemäß wird ein Verfahren zur Herstellung eines elektrochromen Laminats bereitgestellt, umfassend oder bestehend aus den folgenden Schritten:
a) Bereitstellung einer Folie, die einen transparenten, haftklebrigen Polymerelektrolyt enthält oder daraus besteht, wobei die Folie eine flächige Oberseite und eine flächige Unterseite aufweist;
b) Bereitstellung einer ersten Halbzelle, die aus einem ersten Laminat aus einer ersten transparenten Elektrodenschicht und einer elektrochromen Schicht besteht, wobei die erste Halbzelle keinen Glassubstratkörper und keinen Polymersubstratkörper aufweist, der die erste transparente Elektrodenschicht kontaktiert;
c) Bereitstellung einer zweiten Halbzelle, die aus einem zweiten Laminat aus einer zweiten transparenten Elektrodenschicht und einer Ionenspeicherschicht und besteht, wobei die zweite Halbzelle keinen Glassubstratkörper und keinen Polymersubstratkörper aufweist, der die zweite transparente Elektrodenschicht kontaktiert;
d) Beschichten der Oberseite der Folie mit dem ersten Laminat (d.h. der ersten Halbzelle) dergestalt, dass die elektrochrome Schicht des ersten Laminats die Oberseite der Folie kontaktiert und Beschichten der Unterseite der Folie mit dem zweiten Laminat (d.h. der zweiten Halbzelle) dergestalt, dass die Ionenspeicherschicht die Unterseite der Folie kontaktiert, wobei ein elektrochromes Laminat entsteht.

In dem erfindungsgemäßen Verfahren wird als Stützstruktur (Substrat) anstelle eines Glaskörpers oder eines Polymerkörpers eine Folie verwendet, die einen transparenten, haftklebrigen Polymerelektrolyt enthält oder daraus besteht. Das Verfahren kommt somit ohne Verwendung eines Glaskörpers oder eines Polymerkörpers zur Stütze des ersten Laminats aus der ersten transparenten Elektrodenschicht und der elektrochromen Schicht der ersten Halbzelle und zudem ohne die Verwendung eines Glaskörpers oder eines Polymerkörpers zur Stütze der zweiten transparenten Elektrodenschicht und der Ionenspeicherschicht der zweiten Halbzelle aus.

Mit dem erfindungsgemäßen Verfahren wird somit ein verkapseltes elektrochromes Laminat hergestellt, das anders als elektrochrome Laminate aus dem Stand der Technik keine zwei unnötigen Schichten aus Glas oder Polymer enthält. Da besagte Körper aus Glas bzw. Polymer eingespart werden, ist das erfindungsgemäße Verfahren einfacher, schneller, kostengünstiger und umweltfreundlicher durchführbar. Da das Volumen und Gewicht des über das erfindungsgemäße Verfahren hergestellten elektrochromen Laminats aufgrund des Fehlens der besagten Körper aus Glas bzw. Polymer geringer ausfällt, erlaubt das Verfahren zudem die Herstellung eines elektrochromen Laminats, dessen Transport sich einfacher (d.h. platzsparender), kostengünstiger und umweltfreundlicher (d.h. mit geringerem Energieaufwand) gestaltet.

Abgesehen davon hat das Fehlen des unnötigen Körpers aus Glas bzw. Polymer den Vorteil, dass das elektrochrome Laminat in höchstmöglicher Qualität herstellbar ist, da eine mögliche negative optische Beeinträchtigung des elektrochromen Laminats durch unnötige Glasschichten bzw. Polymerschichten vermieden wird.

In einer optionalen Ausführungsform umfasst das Verfahren kein Aufbringen einer Verkapselungsschicht auf das elektrochrome Laminat. Mit dieser Ausführungsform kann ein elektochromes Laminat bereitgestellt werden, dass ein besonders geringes Volumen und ein besonders geringes Gewicht aufweist.

Alternativ umfasst das Verfahren ein Aufbringen einer Verkapselungsschicht auf das elektrochrome Laminat, wobei die Verkapselungsschicht das elektrochrome Laminat vollständig umhüllt. Diese Vorgehensweise hat den Vorteil, dass das elektrochrome Laminat zuverlässiger vor Umwelteinflüssen geschützt wird.

Die auf das elektrochrome Laminat aufgebrachte Verkapselungsschicht kann hierbei ein Metalloxid, Halbmetalloxid, Metallnitrid und/oder Halbmetallnitrid enthalten oder daraus bestehen. Das Metalloxid ist bevorzugt ausgewählt aus der Gruppe bestehend aus Aluminiumoxid, Zinkoxid, Zinnoxid und Kombinationen hiervon. Das Halbmetalloxid ist bevorzugt Siliziumoxid. Das Halbmetallnitrid ist bevorzugt Siliziumnitrid.

Ferner kann die auf das elektrochrome Laminat aufgebrachte Verkapselungsschicht einen polymeren Kunststoff enthalten oder daraus bestehen.

Darüber hinaus kann die Verkapselungsschicht dergestalt auf das elektrochrome Laminat aufgebracht werden, dass sie eine Dicke, in einer Richtung senkrecht auf eine flächige Ausdehnung der Verkapselungsschicht, im Bereich von >0 µm bis 100 µm, bevorzugt >0 µm bis 50 µm, besonders bevorzugt >0 µm bis 10 µm, optional >0 µm bis 1 µm, aufweist. Je dünner die aufgebrachte Verkapselungsschicht ist, desto geringer fällt deren Volumen und Gewicht aus.

Der transparente, haftklebrige Polymerelektrolyt der im Verfahren bereitgestellten Folie kann folgende Komponenten enthalten oder daraus bestehen:
- 5 bis 60 Gew.-%, bevorzugt 10 bis 50 Gew.-%, insbesondere 15 bis 30 Gew.-%, eines polymerisierten Acrylatmonomers, das ausgewählt ist aus der Gruppe bestehend aus (Meth)Acrylsäureester mit 4 bis 15 Kohlenstoffatomen, wobei das polymerisierte Acrylatmonomer als Homopolymer einen T_{g} gemäß Test C von weniger als -30 °C aufweisen würde;
- 10 bis 80 Gew.-%, bevorzugt 35 bis 75 Gew.-%, insbesondere 50 bis 70 Gew.-%, eines polymerisierten Acrylatmonomers, das ausgewählt ist aus der Gruppe bestehend aus (Meth)Acrylsäureester mit 4 bis 25 Kohlenstoffatomen, die mindestens ein Heteroatom aufweisen, wobei das polymerisierte Acrylatmonomer als Homopolymer einen T_{g} gemäß Test C von weniger als 100 °C aufweisen würde;
- 0,05 bis 10 Gew.-%, bevorzugt 0,1 bis 2 Gew.-%, eines thermischen Initiators und/oder eines Photoinitiators, bevorzugt eines Photoinitiators;
- 2 bis 13 Gew.-%, bevorzugt 3 bis 10 Gew.-%, insbesondere 4 bis 8 Gew.-%, eines Leitsalzes;
- optional: einen Weichmacher, bevorzugt in einem Anteil von 5 bis 50 Gew.-%;
- optional: einen Quervernetzer, bevorzugt in einem Anteil von 0,05 bis 5 Gew.-%, besonders bevorzugt in einem Anteil von 0,1 bis 3 Gew.-%, insbesondere in einem Anteil von 0,15 bis 2 Gew.-%;
wobei der transparente, haftklebrige Polymerelektrolyt der Folie insbesondere eine Klebkraft gemäß Test A von mehr als 1 N/cm und eine Ionenleitfähigkeit gemäß Test B von mehr als 10⁻⁶ (Ohm·cm)⁻¹ aufweist.

Der transparente, haftklebrige Polymerelektrolyt der im Verfahren bereitgestellten Folie kann ein in der DE 10 2020 206 126 A1 beschriebener transparenter, haftklebriger Polymerelektrolyt sein.

Die in dem Verfahren bereitgestellte Folie kann eine Dicke, in einer Richtung senkrecht auf die flächige Oberseite der Folie und/oder flächige Unterseite der Folie, im Bereich von 20 bis 100 µm aufweisen. Eine Dicke in diesem Bereich stellt eine hohe mechanische Stabilität des elektrochromen Laminats bei einem geringen Volumen und geringen Gewicht bereit.

Die elektrochrome Schicht der im Verfahren bereitgestellten ersten Halbzelle kann ein Metalloxid enthalten oder daraus bestehen, wobei das Metalloxid bevorzugt ausgewählt ist aus der Gruppe bestehend aus Wolframoxid, Molybdänoxid, Titanoxid und Kombinationen hiervon.

Die Ionenspeicherschicht der im Verfahren bereitgestellten zweiten Halbzelle kann ein Metalloxid enthalten oder daraus bestehen, wobei das Metalloxid bevorzugt ausgewählt ist aus der Gruppe bestehend aus Nickeloxid, Vanadiumoxid, Titanoxid, Ceroxid, Iridiumoxid, Eisenoxid , Manganoxid und Kombinationen hiervon.

In dem Verfahren können die Folie, die erste Halbzelle und die zweite Halbzelle jeweils auf einer Rolle bereitgestellt werden und das Verfahren als Rolle-zu-Rolle-Verfahren durchgeführt werden. Dies erlaubt eine besonders einfache, kostengünstige und umweltfreundliche Herstellung des elektrochromen Laminats.

Erfindungsgemäß wird ferner ein elektrochromes Laminat bereitgestellt, enthaltend oder bestehend aus:
a) eine Folie, die einen transparenten, haftklebrigen Polymerelektrolyt enthält oder daraus besteht, wobei die Folie eine flächige Oberseite und eine flächige Unterseite aufweist;
b) eine erste Halbzelle, die aus einem ersten Laminat einer ersten transparenten Elektrodenschicht und einer elektrochromen Schicht besteht, wobei die erste Halbzelle keinen Glassubstratkörper und keinen Polymersubstratkörper aufweist, der die erste transparente Elektrodenschicht kontaktiert, und wobei das erste Laminat (d.h. die erste Halbzelle) dergestalt auf der Oberseite der Folie laminiert ist, dass die elektrochrome Schicht des ersten Laminats die Oberseite der Folie kontaktiert; und
c) eine zweite Halbzelle, die aus einem zweiten Laminat aus einer zweiten transparenten Elektrodenschicht und einer Ionenspeicherschicht besteht, wobei die zweite Halbzelle keinen Glassubstratkörper und keinen Polymersubstratkörper aufweist, der die zweite transparente Elektrodenschicht kontaktiert, und wobei das zweite Laminat (d.h. die zweite Halbzelle) dergestalt auf der Unterseite der Folie laminiert ist, dass die Ionenspeicherschicht des zweiten Laminats die Unterseite der Folie kontaktiert.

Das erfindungsgemäße elektrochrome Laminat ist einfacher, kostengünstiger und umweltfreundlicher herstellbar und transportierbar als bekannte elektrochrome Laminate und weist zudem eine höhere optische Qualität auf als bekannte elektrochrome Laminate.

In einer optionalen Ausgestaltungsform weist das elektrochrome Laminat keine Verkapselungsschicht auf, die auf das elektrochrome Laminat aufgebracht ist und das elektrochrome Laminat vollständig umhüllt.

Alternativ weist das elektrochrome Laminat eine Verkapselungsschicht auf, die auf das elektrochrome Laminat aufgebracht ist und das elektrochrome Laminat vollständig umhüllt.

Die Verkapselungsschicht kann hierbei ein Metalloxid, Halbmetalloxid, Metallnitrid und/oder Halbmetallnitrid enthalten oder daraus bestehen. Das Metalloxid ist bevorzugt ausgewählt aus der Gruppe bestehend aus Aluminiumoxid, Zinkoxid, Zinnoxid und Kombinationen hiervon. Das Halbmetalloxid ist bevorzugt Siliziumoxid. Das Halbmetallnitrid ist bevorzugt Siliziumnitrid.

Ferner kann die Verkapselungsschicht einen polymeren Kunststoff enthalten oder daraus bestehen.

Abgesehen davon kann die Verkapselungsschicht eine Dicke, in einer Richtung senkrecht auf eine flächige Ausdehnung der Verkapselungsschicht, im Bereich von >0 µm bis 100 µm, bevorzugt >0 µm bis 50 µm, besonders bevorzugt >0 µm bis 10 µm, optional >0 µm bis 1 µm, aufweisen.

Der transparente, haftklebrige Polymerelektrolyt der Folie kann folgenden Komponenten enthalten oder daraus bestehen:
- 5 bis 60 Gew.-%, bevorzugt 10 bis 50 Gew.-%, insbesondere 15 bis 30 Gew.-%, eines polymerisierten Acrylatmonomers, das ausgewählt ist aus der Gruppe bestehend aus (Meth)Acrylsäureester mit 4 bis 15 Kohlenstoffatomen, wobei das polymerisierte Acrylatmonomer als Homopolymer einen T_{g} gemäß Test C von weniger als -30 °C aufweisen würde;
- 10 bis 80 Gew.-%, bevorzugt 35 bis 75 Gew.-%, insbesondere 50 bis 70 Gew.-%, eines polymerisierten Acrylatmonomers, das ausgewählt ist aus der Gruppe bestehend aus (Meth)Acrylsäureester mit 4 bis 25 Kohlenstoffatomen, die mindestens ein Heteroatom aufweisen, wobei das polymerisierte Acrylatmonomer als Homopolymer einen T_{g} gemäß Test C von weniger als 100 °C aufweisen würde;
- 0,05 bis 10 Gew.-%, bevorzugt 0,1 bis 2 Gew.-%, eines thermischen Initiators und/oder eines Photoinitiators, bevorzugt eines Photoinitiators;
- 2 bis 13 Gew.-%, bevorzugt 3 bis 10 Gew.-%, insbesondere 4 bis 8 Gew.-%, eines Leitsalzes;
- optional: einen Weichmacher, bevorzugt in einem Anteil von 5 bis 50 Gew.-%;
- optional: einen Quervernetzer, bevorzugt in einem Anteil von 0,05 bis 5 Gew.-%, besonders bevorzugt in einem Anteil von 0,1 bis 3 Gew.-%, insbesondere in einem Anteil von 0,15 bis 2 Gew.-%;
wobei der transparente, haftklebrige Polymerelektrolyt der Folie insbesondere eine Klebkraft gemäß Test A von mehr als 1 N/cm und eine Ionenleitfähigkeit gemäß Test B von mehr als 10⁻⁶ (Ohm·cm)⁻¹ aufweist.

Der transparente, haftklebrige Polymerelektrolyt kann ein in der DE 10 2020 206 126 A1 beschriebener transparenter, haftklebriger Polymerelektrolyt sein.

Die Folie des elektrochromen Laminats kann eine Dicke, in einer Richtung senkrecht auf die flächige Oberseite der Folie und/oder flächige Unterseite der Folie, im Bereich von 20 bis 100 µm aufweisen.

Die elektrochrome Schicht des elektrochromen Laminats kann ein Metalloxid enthalten oder daraus bestehen, wobei das Metalloxid bevorzugt ausgewählt ist aus der Gruppe bestehend aus Wolframoxid, Molybdänoxid, Titanoxid und Kombinationen hiervon.

Die Ionenspeicherschicht des elektrochromen Laminats kann ein Metalloxid enthalten oder daraus bestehen, wobei das Metalloxid bevorzugt ausgewählt ist aus der Gruppe bestehend aus Nickeloxid, Vanadiumoxid, Titanoxid, Ceroxid, Iridiumoxid, Eisenoxid, Manganoxid und Kombinationen hiervon.

Das erfindungsgemäße elektrochrome Laminat kann mit dem erfindungsgemäßen Verfahren hergestellt sein.

Es wird vorgeschlagen, das erfindungsgemäße elektrochrome Laminat als Bestandteil einer Fensterscheibe zu verwenden, bevorzugt als Bestandteil einer Fensterscheibe eines Gebäudes.

Anhang des nachfolgenden Beispiels soll der erfindungsgemäße Gegenstand näher erläutert werden, ohne diesen auf die hier dargestellten, spezifischen Ausführungsbeispiele einschränken zu wollen.

### Beispiel - Folie, die aus einem transparenten, haftklebrigen Polymerelektrolyt besteht

Transparente, haftklebrige Polymerelektrolyten, die sich für die Bereitstellung der Folie in dem erfindungsgemäßen Verfahren eignen, sind dem Fachmann beispielsweise aus der DE 10 2020 206 126 A1 bekannt.

Ein solcher Elektrolyt kann die folgenden Komponenten enthalten oder daraus bestehen:
- 5 bis 60 Gew.-%, bevorzugt 10 bis 50 Gew.-%, insbesondere 15 bis 30 Gew.-%, eines polymerisierten Acrylatmonomers, das ausgewählt ist aus der Gruppe bestehend aus (Meth)Acrylsäureester mit 4 bis 15 Kohlenstoffatomen, wobei das polymerisierte Acrylatmonomer als Homopolymer einen T_{g} gemäß Test C von weniger als -30 °C aufweisen würde;
- 10 bis 80 Gew.-%, bevorzugt 35 bis 75 Gew.-%, insbesondere 50 bis 70 Gew.-%, eines polymerisierten Acrylatmonomers, das ausgewählt ist aus der Gruppe bestehend aus (Meth)Acrylsäureester mit 4 bis 25 Kohlenstoffatomen, die mindestens ein Heteroatom aufweisen, wobei das polymerisierte Acrylatmonomer als Homopolymer einen T_{g} gemäß Test C von weniger als 100 °C aufweisen würde;
- 0,05 bis 10 Gew.-%, bevorzugt 0,1 bis 2 Gew.-%, eines thermischen Initiators und/oder eines Photoinitiators, bevorzugt eines Photoinitiators;
- 2 bis 13 Gew.-%, bevorzugt 3 bis 10 Gew.-%, insbesondere 4 bis 8 Gew.-%, eines Leitsalzes;
- optional: einen Weichmacher, bevorzugt in einem Anteil von 5 bis 50 Gew.-%;
- optional: einen Quervernetzer, bevorzugt in einem Anteil von 0,05 bis 5 Gew.-%, besonders bevorzugt in einem Anteil von 0,1 bis 3 Gew.-%, insbesondere in einem Anteil von 0,15 bis 2 Gew.-%.

T_{g} (in °C) bezeichnet einen Glasübergangspunkt (Glasübergangstemperatur) eines Polymers (z.B. eines Homopolymers oder Copolymers). T_{g} kann mittels Dynamischer Differenzkalorimetrie DDK (englisch: Dynamic Scanning Calorimetry; DSC) gemäß der DIN 53 765 bestimmt werden. In Test C beträgt die Probeneinwage 20 mg und die Heiz- und Kühlraten sind einheitlich bei 10 K/min in allen Heiz- und Kühlschritten (vergleiche DIN 53 765, Abschnitt 7.1, Anmerkung 1).

Dieser transparente, haftklebrige Polymerelektrolyt kann eine Klebkraft gemäß Test A von mehr als 1 N/cm aufweisen. Die Klebkraft (in N/cm) wird gemäß Test A folgendermaßen bestimmt: Herstellung einer Folie 30 µm dicken Folie aus dem transparenten, haftklebrigen Polymerelektrolyt auf einem Glassubstrat (Schälfestigkeit) und Bestimmung der Klebkraft gemäß PSTC 1. Zur Bestimmung der Klebkraft gemäß PSTC 1 wird ein Streifen der Folie mit einer Breite von 2 cm derart auf eine Glasplatte aufgebracht, dass lediglich ein freier Endabschnitt des Streifens mit einem Abdeckungsmittel abgedeckt ist und somit nicht mit der Oberfläche der Glasplatte in Kontakt steht. Der mit dem Glassubstrat in Kontakt stehende Bereich der Folie wird dann mit Hilfe einer Rolle einer Masse von 2 kg an das Glassubstrat durch dreimaliges Überrollen angepresst, wobei jedes Überrollen zwei jeweils in gegenläufigen Vorschubrichtungen belastende Rollendurchgänge umfasst. Anschließend wird das Abdeckungsmittel mit der Hand abgezogen. Zur Messung der Klebkraft wird die Glasplatte ortsfest fixiert. Die Folie wird mit ihrem freien Ende an einer Zugprüfmaschine befestigt und 10 min nach dem Verkleben (Messung der Sofortklebkraft) mittels der Zugprüfmaschine unter einem Schälwinkel von 180° mit einer Vorschubgeschwindigkeit von 300 mm/min abgezogen. Die maximale Kraft, bei der noch kein Lösen der Verklebung beobachtet wird, entspricht der Klebkraft auf der Glasplatte. Der Messwert (in N/cm) ergibt sich als Mittelwert aus drei Einzelmessungen.

Ferner kann dieser transparente, haftklebrige Polymerelektrolyt eine lonenleitfähigkeit gemäß Test B von mehr als 10⁻⁶ (Ohm·cm)⁻¹ aufweisen. Die Ionenleitfähigkeit (in (Ohm·cm)⁻¹) für Leitsalzionen (z.B. Alkalimetallionen wie Lithiumionen) kann gemäß Test B mittels EIS (Elektrchemischer Impedanz Spektroskopie) bestimmt werden. Dies kann umfassen, die lonenleitfähigkeit aus dem Nyquist-Plot Fit eines passenden Ersatzschaltbildes zu berechnen. Zur Messung kann ein Metrohm Autolab PGSTAT204 mit FRA32M Modul mit einer angebundenen Autolab Microcell HC Apparatur mit aufgesetzter TSC Batteriezelle verwendet werden. Dabei kann eine Probe mit einem Durchmesser von 10 mm zwischen die Elektroden appliziert werden. Zur Berechnung der Zellkonstante kann die Probendicke vorab mit einem Wolf DM2010 Dickentaster gemessen werden. Die Messung kann mit einer Frequenz von 100 kHz bis 0.1 Hz mit einer AC Spannung von 10 mV RMS erfolgen. Die Auswertung kann mit der Software NOVA2 erfolgen. Die Messtemperatur kann 25°C betragen.

Abgesehen von dem in der DE 10 2020 206 126 A1 offenbarten transparenten, haftklebrigen Polymerelektrolyten sind dem Fachmann weitere transparente, haftklebrige Polymerelektrolyten bekannt, die sich ebenfalls für die Bereitstellung der Folie in dem erfindungsgemäßen Verfahren eignen (siehe z.B. DE 102 59 549 A1, DE 102 56 515 A1 und US 2014/0295180 A1).

## Patentansprüche

1. Verfahren zur Herstellung eines elektrochromen Laminats, umfassend oder bestehend aus den folgenden Schritten:
a) Bereitstellung einer Folie, die einen transparenten, haftklebrigen Polymerelektrolyt enthält oder daraus besteht, wobei die Folie eine flächige Oberseite und eine flächige Unterseite aufweist;
b) Bereitstellung einer ersten Halbzelle, die aus einem ersten Laminat aus einer ersten transparenten Elektrodenschicht und einer elektrochromen Schicht besteht, wobei die erste Halbzelle keinen Glassubstratkörper und keinen Polymersubstratkörper aufweist, der die erste transparente Elektrodenschicht kontaktiert;
c) Bereitstellung einer zweiten Halbzelle, die aus einem zweiten Laminat aus einer zweiten transparenten Elektrodenschicht und einer Ionenspeicherschicht und besteht, wobei die zweite Halbzelle keinen Glassubstratkörper und keinen Polymersubstratkörper aufweist, der die zweite transparente Elektrodenschicht kontaktiert;
d) Beschichten der Oberseite der Folie mit dem ersten Laminat dergestalt, dass die elektrochrome Schicht des ersten Laminats die Oberseite der Folie kontaktiert und Beschichten der Unterseite der Folie mit dem zweiten Laminat dergestalt, dass die Ionenspeicherschicht die Unterseite der Folie kontaktiert, wobei ein elektrochromes Laminat entsteht.

2. Verfahren gemäß dem vorhergehenden Anspruch, **dadurch gekennzeichnet, dass** das Verfahren
i) kein Aufbringen einer Verkapselungsschicht auf das elektrochrome Laminat umfasst; oder
ii) ein Aufbringen einer Verkapselungsschicht auf das elektrochrome Laminat umfasst, wobei die Verkapselungsschicht das elektrochrome Laminat vollständig umhüllt;
wobei die Verkapselungsschicht bevorzugt
- ein Metalloxid, Halbmetalloxid, Metallnitrid und/oder Halbmetallnitrid enthält oder daraus besteht, wobei das Metalloxid bevorzugt ausgewählt ist aus der Gruppe bestehend aus Aluminiumoxid, Zinkoxid, Zinnoxid und Kombinationen hiervon, das Halbmetalloxid bevorzugt Siliziumoxid ist und/oder das Halbmetallnitrid bevorzugt Siliziumnitrid ist; und/oder
- einen polymeren Kunststoff enthält oder daraus besteht; und/oder
- eine Dicke, in einer Richtung senkrecht auf eine flächige Ausdehnung der Verkapselungsschicht, im Bereich von >0 µm bis 100 µm, bevorzugt >0 µm bis 50 µm, besonders bevorzugt >0 µm bis 10 µm, optional >0 µm bis 1 µm, aufweist.

3. Verfahren gemäß einem der vorhergehenden Ansprüche, **dadurch gekennzeichnet, dass** der transparente, haftklebrige Polymerelektrolyt der Folie folgenden Komponenten enthält oder daraus besteht:
- 5 bis 60 Gew.-%, bevorzugt 10 bis 50 Gew.-%, insbesondere 15 bis 30 Gew.-%, eines polymerisierten Acrylatmonomers, das ausgewählt ist aus der Gruppe bestehend aus (Meth)Acrylsäureester mit 4 bis 15 Kohlenstoffatomen, wobei das polymerisierte Acrylatmonomer als Homopolymer einen T_{g} gemäß Test C von weniger als -30 °C aufweisen würde;
- 10 bis 80 Gew.-%, bevorzugt 35 bis 75 Gew.-%, insbesondere 50 bis 70 Gew.-%, eines polymerisierten Acrylatmonomers, das ausgewählt ist aus der Gruppe bestehend aus (Meth)Acrylsäureester mit 4 bis 25 Kohlenstoffatomen, die mindestens ein Heteroatom aufweisen, wobei das polymerisierte Acrylatmonomer als Homopolymer einen T_{g} gemäß Test C von weniger als 100 °C aufweisen würde;
- 0,05 bis 10 Gew.-%, bevorzugt 0,1 bis 2 Gew.-%, eines thermischen Initiators und/oder eines Photoinitiators, bevorzugt eines Photoinitiators;
- 2 bis 13 Gew.-%, bevorzugt 3 bis 10 Gew.-%, insbesondere 4 bis 8 Gew.-%, eines Leitsalzes;
- optional: einen Weichmacher, bevorzugt in einem Anteil von 5 bis 50 Gew.-%;
- optional: einen Quervernetzer, bevorzugt in einem Anteil von 0,05 bis 5 Gew.-%, besonders bevorzugt in einem Anteil von 0,1 bis 3 Gew.-%, insbesondere in einem Anteil von 0,15 bis 2 Gew.-%;
wobei der transparente, haftklebrige Polymerelektrolyt der Folie insbesondere eine Klebkraft gemäß Test A von mehr als 1 N/cm und eine Ionenleitfähigkeit gemäß Test B von mehr als 10⁻⁶ (Ohm·cm)⁻¹ aufweist.

4. Verfahren gemäß einem der vorhergehenden Ansprüche, **dadurch gekennzeichnet, dass** die Folie eine Dicke, in einer Richtung senkrecht auf die flächige Oberseite der Folie und/oder flächige Unterseite der Folie, im Bereich von 20 bis 100 µm aufweist.

5. Verfahren gemäß einem der vorhergehenden Ansprüche, **dadurch gekennzeichnet, dass** die elektrochrome Schicht ein Metalloxid enthält oder daraus besteht, wobei das Metalloxid bevorzugt ausgewählt ist aus der Gruppe bestehend aus Wolframoxid, Molybdänoxid, Titanoxid und Kombinationen hiervon.

6. Verfahren gemäß einem der vorhergehenden Ansprüche, **dadurch gekennzeichnet, dass** die Ionenspeicherschicht ein Metalloxid enthält oder daraus besteht, wobei das Metalloxid bevorzugt ausgewählt ist aus der Gruppe bestehend aus Nickeloxid, Vanadiumoxid, Titanoxid, Ceroxid, Iridiumoxid, Manganoxid, Eisenoxid und Kombinationen hiervon.

7. Elektrochromes Laminat enthaltend oder bestehend aus:
a) eine Folie, die einen transparenten, haftklebrigen Polymerelektrolyt enthält oder daraus besteht, wobei die Folie eine flächige Oberseite und eine flächige Unterseite aufweist;
b) eine erste Halbzelle, die aus einem ersten Laminat einer ersten transparenten Elektrodenschicht und einer elektrochromen Schicht besteht, wobei die erste Halbzelle keinen Glassubstratkörper und keinen Polymersubstratkörper aufweist, der die erste transparente Elektrodenschicht kontaktiert, und wobei das erste Laminat dergestalt auf der Oberseite der Folie laminiert ist, dass die elektrochrome Schicht des ersten Laminats die Oberseite der Folie kontaktiert; und
c) eine zweite Halbzelle, die aus einem zweiten Laminat aus einer zweiten transparenten Elektrodenschicht und einer Ionenspeicherschicht besteht, wobei die zweite Halbzelle keinen Glassubstratkörper und keinen Polymersubstratkörper aufweist, der die zweite transparente Elektrodenschicht kontaktiert, und wobei das zweite Laminat dergestalt auf der Unterseite der Folie laminiert ist, dass die Ionenspeicherschicht des zweiten Laminats die Unterseite der Folie kontaktiert.

8. Elektrochromes Laminat gemäß Anspruch 7, **dadurch gekennzeichnet, dass** das elektrochrome Laminat
i) keine Verkapselungsschicht aufweist, die auf das elektrochrome Laminat aufgebracht ist und das elektrochrome Laminat vollständig umhüllt; oder
ii) eine Verkapselungsschicht aufweist, die auf das elektrochrome Laminat aufgebracht ist und das elektrochrome Laminat vollständig umhüllt;
wobei die Verkapselungsschicht bevorzugt
- ein Metalloxid, Halbmetalloxid, Metallnitrid und/oder Halbmetallnitrid enthält oder daraus besteht, wobei das Metalloxid bevorzugt ausgewählt ist aus der Gruppe bestehend aus Aluminiumoxid, Zinkoxid, Zinnoxid und Kombinationen hiervon, das Halbmetalloxid bevorzugt Siliziumoxid ist und/oder das Halbmetallnitrid bevorzugt Siliziumnitrid ist;
- einen polymeren Kunststoff enthält oder daraus besteht; und/oder
- eine Dicke, in einer Richtung senkrecht auf eine flächige Ausdehnung der Verkapselungsschicht, im Bereich von >0 µm bis 100 µm, bevorzugt >0 µm bis 50 µm, besonders bevorzugt >0 µm bis 10 µm, optional >0 µm bis 1 µm, aufweist.

9. Elektrochromes Laminat gemäß einem der Ansprüche 7 oder 8, **dadurch gekennzeichnet, dass** der transparente, haftklebrige Polymerelektrolyt der Folie folgenden Komponenten enthält oder daraus besteht:
- 5 bis 60 Gew.-%, bevorzugt 10 bis 50 Gew.-%, insbesondere 15 bis 30 Gew.-%, eines polymerisierten Acrylatmonomers, das ausgewählt ist aus der Gruppe bestehend aus (Meth)Acrylsäureester mit 4 bis 15 Kohlenstoffatomen, wobei das polymerisierte Acrylatmonomer als Homopolymer einen T_{g} gemäß Test C von weniger als -30 °C aufweisen würde;
- 10 bis 80 Gew.-%, bevorzugt 35 bis 75 Gew.-%, insbesondere 50 bis 70 Gew.-%, eines polymerisierten Acrylatmonomers, das ausgewählt ist aus der Gruppe bestehend aus (Meth)Acrylsäureester mit 4 bis 25 Kohlenstoffatomen, die mindestens ein Heteroatom aufweisen, wobei das polymerisierte Acrylatmonomer als Homopolymer einen T_{g} gemäß Test C von weniger als 100 °C aufweisen würde;
- 0,05 bis 10 Gew.-%, bevorzugt 0,1 bis 2 Gew.-%, eines thermischen Initiators und/oder eines Photoinitiators, bevorzugt eines Photoinitiators;
- 2 bis 13 Gew.-%, bevorzugt 3 bis 10 Gew.-%, insbesondere 4 bis 8 Gew.-%, eines Leitsalzes;
- optional: einen Weichmacher, bevorzugt in einem Anteil von 5 bis 50 Gew.-%;
- optional: einen Quervernetzer, bevorzugt in einem Anteil von 0,05 bis 5 Gew.-%, besonders bevorzugt in einem Anteil von 0,1 bis 3 Gew.-%, insbesondere in einem Anteil von 0,15 bis 2 Gew.-%;
wobei der transparente, haftklebrige Polymerelektrolyt der Folie insbesondere eine Klebkraft gemäß Test A von mehr als 1 N/cm und eine Ionenleitfähigkeit gemäß Test B von mehr als 10⁻⁶ (Ohm·cm)⁻¹ aufweist.

10. Elektrochromes Laminat gemäß einem der Ansprüche 7 bis 9, **dadurch gekennzeichnet, dass** die Folie eine Dicke, in einer Richtung senkrecht auf die flächige Oberseite der Folie und/oder flächige Unterseite der Folie, im Bereich von 20 bis 100 µm aufweist.

11. Elektrochromes Laminat gemäß einem der Ansprüche 7 bis 10, **dadurch gekennzeichnet, dass** die elektrochrome Schicht ein Metalloxid enthält oder daraus besteht, wobei das Metalloxid bevorzugt ausgewählt ist aus der Gruppe bestehend aus Wolframoxid, Molybdänoxid, Titanoxid und Kombinationen hiervon.

12. Elektrochromes Laminat gemäß einem der Ansprüche 7 bis 11, **dadurch gekennzeichnet, dass** die Ionenspeicherschicht ein Metalloxid enthält oder daraus besteht, wobei das Metalloxid bevorzugt ausgewählt ist aus der Gruppe bestehend aus Nickeloxid, Vanadiumoxid, Titanoxid, Ceroxid, Iridiumoxid, Manganoxid, Eisenoxid und Kombinationen hiervon.
